(19) Europäisches Patentamt
European Patent Office
Office européen des brevets

(11) Veröffentlichungsnummer: **0 000 171**
**B1**

(12)
# EUROPÄISCHE PATENTSCHRIFT

(21) Anmeldenummer: **78100198.7**

(22) Anmeldetag: **20.06.78**

(51) Int. Cl.³: **C 08 G 18/42,**
C 08 G 18/34

(54) **Carboxylatgruppen aufweisende Polyisocyanat-Additionsprodukte und ein Verfahren zu ihrer Herstellung**

(30) Priorität: **29.06.77 DE 2729245**

(43) Veröffentlichungstag der Anmeldung:
**10.01.79 Patentblatt 79/01**

(45) Bekanntmachung des Hinweises auf die Patenterteilung:
**06.08.80 Patentblatt 80/16**

(84) Benannte Vertragsstaaten:
**BE DE FR GB**

(56) Entgegenhaltungen:
**FR - A - 2 253 039**

(73) Patentinhaber: **Bayer AG**
**Zentralbereich Patente, Marken und Lizenzen**
**D - 5090 Leverkusen 1, Bayerwerk (DE)**

(72) Erfinder: **Nachtkamp, Klaus, Dr.**
**Im Odinshof 17**
**D - 5060 Bergisch Gladbach 2 (DE)**
**Dietrich, Dieter, Dr.**
**Ludwig-Girtler-Strasse 1**
**D - 5090 Leverkusen (DE)**
**Lorenz, Otto, Dr.**
**Lensbachstrasse 19**
**D - 5106 Roetgen-Rott (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 000 171 B1

Carboxylatgruppen aufweisende Polyisocyanat-Additionsprodukte und ein Verfahren zu ihrer Herstellung

Es sind eine Reihe von Verfahren zur Herstellung von Polyurethanen, welche Carboxylatgruppen aufweisen, bekannt. So kann man beispielsweise übliche Präpolymere mit endständigen Isocyanatgruppen in einem organischen Lösungsmittel mit wäßrigen Lösungen von Aminocarbonsäuren bzw. deren Salzen zu entsprechenden Carboxylatgruppen aufweisenden Polyurethan-Harnstoffen umsetzen (vgl. z.B. DE—AS 1 495 745, GB—PS 1 076 688, US—PS 3 539 483).

Nach einem anderen Verfahren kann man zum Aufbau von Polyurethanen Dimethylolpropionsäure als Kettenverlängerungsmittel einsetzen, wobei die freie Carboxylgruppe überwiegend erhalten bleibt und anschließend neutralisiert werden kann (vgl. z.B. US—PS 3 412 054, DE—OS 1 913 271).

Nach einem weiteren vorbekannten Verfahren werden Polyurethane, welche freie primäre oder sekundäre Amino-Gruppen enthalten, mit $\beta$-Propiolacton oder dem Anhydrid einer Dicarbonsäure umgesetzt, wobei eine Modifizierung des Polyurethans mit freien Carboxylgruppen erfolgt (vgl. z.B. DE—AS 1 237 306).

Es ist auch schon beschrieben worden, Polyäther bzw. Polyester mit endständigen OH-Gruppen und seitenständigen Sulfonat- oder Carboxylatgruppen zum Aufbau von anionischen Polyurethan-Dispersionen einzusetzen (vgl. z.B. DE—AS 1 570 615).

Zur Herstellung von Polyestern mit seitenständigen anionischen Gruppen wurde die Mitverwendung von Diaminen, welche Sulfonatoder Carboxylatgruppen enthalten, in Betracht gezogen (vgl. z.B. DE—AS 1 570 615).

Die Nachteile der bekannten Verfahren bestehen darin, daß sie entweder nur in Gegenwart von organischen Lösungsmitteln durchgeführt werden können, oder speziell aufgebaute Polyester eingesetzt werden müssen. Der Einbau von Dimethylolpropionsäure in Isocyanatpräpolymere ist zwar lösungsmittelfrei möglich, jedoch besteht in einer Reihe von Fällen das Problem, die Dimethylolpropionsäure bei den erforderlichen niedrigen Reaktionstemperaturen im Präpolymer zu lösen. Schließlich ist von Nachteil, daß Dimethylolpropionsäure nur über eine Isocyanatreaktion eingebaut werden kann, was verhältnismäßig hohe Viskositäten des so modifizierten NCO-Präpolymeren zur Folge hat.

Aus der Chemie der dispergierbaren Esterharze sind zwar Ester, welche sowohl Hydroxygruppen als auch freie Carboxylgruppen enthalten, bekannt, (vgl. z.B. DE—OS 2 323 546, US—PS 4 029 617, BE—PS 803 346 oder US—PS 3 876 582), jedoch sind in solchen Produkten die reaktiven Gruppen statistisch verteilt, so daß auf Basis dieser bekannten Produkte der Aufbau von strukturell definierten und insbesondere von überwiegend linearen Polyurethanen nicht möglich ist.

Demgegenüber wurde nunmehr ein Verfahren aufgefunden, welches die Herstellung von Carboxylat-Gruppen enthaltenden Polyisocyanat-Additions-Produkten und insbesondere von wäßrigen Dispersionen hiervon, auf einfache Weise sowohl mit als auch insbesondere ohne Verwendung organischer Lösungsmittel ermöglicht. Insbesondere gestattet das neue Verfahren die Herstellung von niedrigviskosen anionischen NCO-Präpolymeren unter Verwendung optimal niedriger Mengen an Polyisocyanaten, wodurch lösungsmittelfreie Dispergierverfahren auf besonders einfache Weise durchgeführt werden können. Die verwendete Carboxylkomponente ist gut und preiswert zugänglich und der gesamte Herstellprozeß erfolgt unter schonenden Bedingungen.

Gegenstand der vorliegenden Erfindung sind überwiegend lineare, Carboxylat- und Amid-Gruppen aufweisende Polyisocyanat-Polyadditionsprodukte gekennleichnet durch wiederkehrende Struktureinheiten der Formeln

$$-(CO)_m-NH-R_1-NH-CO-O-R_2-O-CO-\underset{\displaystyle (COO^{(-)}Kat^{(+)})_n}{\underset{|}{R_3}}-CO-NH-R_1-NH-CO-$$

oder

$$-(CO)_m-NH-R_1-NH-CO-\underset{\displaystyle (COO^{(-)}Kat^{(+)})_n}{\underset{|}{R_3}}-CO-O-R_2-O-CO-\underset{\displaystyle (COO^{(-)}Kat^{(+)})_n}{\underset{|}{R_3}}-CO-NH-R_1-NH-CO-$$

in welcher

m für 0 oder 1 steht,

n für 1 oder 2 steht,

$R_1$ für einen Rest steht, wie er durch Entfernung der Isocyanatgruppen aus einem organischen Diisocyanat erhalten wird,

$R_2$ für einen Rest steht, wie er durch Entfernung der Hydroxylgruppen aus einem gegebenenfalls Äther- oder Estergruppen aufweisenden Glykol bzw. Glykol-Gemisch eines (mittleren) Molekulargewichts zwischen 62 und 10.000 erhalten wird,

$R_3$ für einen Rest steht wie er durch Entfernung der Carboxylgruppen aus einer organischen Tri- oder Tetracarbonsäure erhalten wird und

$Kat^{(+)}$ für ein Alkali- oder ein sich aus einem tert. Amin ableitenden Kation steht.

Gegenstand der vorliegenden Erfindung ist auch ein Verfahren zur Herstellung von überwiegend linearen Carboxylat-, Amid- und gegebenenfalls Urethangruppen aufweisenden Polyisocyanat-Polyadditionsprodukten mit wiederkehrenden Struktureinheiten der in Anspruch 1 genannten Formeln über die Zwischenstufe von Isocyanatgruppen aufweisenden Präpolymeren, welche durch Umsetzung von organischen Diisocyanaten mit Carboxylatgruppen, freie Carboxylgruppen und gegebenenfalls Hydroxylgruppen aufweisenden Polyestern, welche durch Reaktion einer Polyhydroxylkomponente mit einem intramolekularen Carbonsäureanhydrid unter anschließender Teilneutralisation des Umsetzungsproduktes erhalten worden sind, dadurch gekennzeichnet, daß man

a) eine Polyhydroxylkomponente, welche entweder aus einem oder mehreren Glykolen des (mittleren) Molekulargewichts 62 bis 10 000 oder einem Alkoholgemisch einer mittleren OH-Funktionalität von 1,8 bis 3,0, welches einwertige Alkohole des Molekulargewichtsbereichs 32 bis 5000 und/oder zweiwertige Alkohole des Molekulargewichtsbereichs 62 bis 10 000 und/oder höherfunktionelle Alkohole des Molekulargewichtsbereichs 92 bis 10 000 enthalten kann, besteht, mit intramolekularen Tricarbonsäuremonoanhydriden oder intramolekularen Tetracarbonsäuremonoanhydriden unter Ringöffnung der Anhydridgruppe in solchen Mengen umsetzt, daß pro Hydroxylgruppe der Polyhydroxylkomponente 0,05 bis 1 Anhydridgruppen vorliegen,

b) die Carboxylgruppen des gemäß Reaktionsschritt a) erhaltenen Umsetzungsprodukte so mit einer anorganischen oder organischen Base teilneutralisiert, daß im statistischen Mittel pro Mol des Umsetzungsprodukts 0,1 bis 4 Mol Carboxylatgruppen und insgesamt 1,8 bis 3,8 Mol Carboxyl- und gegebenenfalls Hydroxylgruppen vorliegen,

c) das gemäß Reaktionsschritt b) erhaltene Carboxylat-, Carboxyl- und gegebenenfalls Hydroxylgruppen aufweisende Reaktionsprodukt, sowie die gegebenenfalls im Gemisch vorliegende, nichtmodifizierte Polyhydroxylkomponente mit einer Diisocyanatkomponente einer mittleren NCO-Funktionalität zwischen 1,8 und 3,0 zu einem Carboxylat-, Amid- und gegebenenfalls Urethangruppen aufweisenden Präpolymeren umsetzt, wobei (i) die Menge der Diisocyanatkomponente 1,2 bis 2 Äquivalenten an NCO-Gruppen pro Äquivalent an gegenüber Isocyanatgruppen reaktionsfähigen Gruppen entspricht, oder (ii) ein hoher Diisocyanatüberschuß eingesetzt wird, wobei nach Beendigung der Isocyanat-Additionsreaktion das überschüssige Diisocyanat durch Destillation entfernt wird, oder (iii) die Menge der Isocyanatkomponente 0,8 bis 1,2 Äquivalenten an NCO-Gruppen pro Äquivalent an gegenüber Isocyanatgruppen Reaktionsfähigen Gruppen entspricht, wobei gegebenenfalls durch einen vorzeitigen Abbruch der Isocyanat-Additionsreaktion durch eine sofortige Kettenverlängerungsreaktion gemäß d) sichergestellt wird, daß das Reaktionsprodukt noch freie Isocyanatgruppen aufweist, und

d) schließlich das gemäß Reaktionsstufe c) erhaltene NCO-Präpolymere einer Kettenverlängerungsreaktion unterzieht.

Die beim erfindungsgemäßen Verfahren zum Einsatz gelangende Polyhydroxylkomponente weist eine(mittlere)OH-Funktionalität von 1,8 bis 3 vorzugsweise 1,8 bis 2,2 auf. Es handelt sich entweder um Glykole bzw. Glykolgemische eines (mittleren) Molekulargewichts von 62—10.000 vorzugsweise 200—50 00 und insbesondere 300—3.000 oder um Alkoholgemische, welche einwertige Alkohole des Molekulargewichtsbereichs 32—5.000 vorzugsweise 500—4.000 und/oder Glykole der bereits genannten Molekulargewichtsbereiche und/oder höherfunktionelle Alkohole des Molekulargewichtsbereichs 92—10.000 vorzugsweise 92—300 enthalten.

Bei den Glykolen handelt es sich vorzugsweise um Polyester-Diole oder Polyäther-Diole.

Daneben kommen jedoch auch einfache Alkandiole oder aber auch zwei Hydroxylgruppen aufweisende Polythioäther, Polyacetale, Polyamide oder Polyurethane in Betracht.

Bei den höherfunktionellen Polyhydroxylverbindungen handelt es sich vorzugsweise um einfache Alkan-Polyole, jedoch kommen auch tri- oder höherfunktionelle Polyätherpolyole oder Polyesterpolyole in Betracht.

Bei den in der Polyhydroxyl-Komponente vorliegenden Diolen bzw. Polyolen handelt es sich somit um

1. Alkandiole bzw. -polyole wie z.B. Äthylenglykol, 1,2-Propandiol, 1,3-Propandiol, Tetramethylenglykol, Hexamethylenglykol, Glycerin, Trimethyloläthan, Trimethylolpropan, Pentaerythrit, Sorbit, Bisphenol A, äthoxyliertes bzw. propoxyliertes Bisphenol A, 2,2-Bis-(4-hydroxycyclohexyl-)propan oder Dimethylol-tricyclodecan ($5.2.1.0^{2.6}$).
2. Modifizierte, d.h. insbesondere Äther oder Estergruppen aufwiesende Polyole oder aber auch Polyhydroxypolythioäther, Polyhydroxypolyacetale, Polyhydroxypolycarbonate und/oder Polyhydroxyplyesteramide.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren, Anstelle der freien Polycarbonsäuren können auch die entsprechenden Polycarbonsäuranhydride oder entsprechende Polycarbonsäureester von niederen Alkoholen oder deren Gemische zur Herstellung der Polyester verwendet werden. Die Polycarbonsäure können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure,

Sebacinsäure, Phthalsäure, Isophthalsäure, Trimellitsäure, Phthalsäureanhydrid, Tetrahydrophthalsäure, anhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren z.B. der Olsäure, gegebenenfalls in Mischung mit monomeren Fettsäuren, Terephthalsäuredimethylester, Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol-Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diäthylenglykol, Triäthylenglykol, Tetraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. $\varepsilon$-Caprolacton oder Hydroxycarbonsäuren, z.B. $\omega$-Hydroxycapronsäure, sind einsetzbar.

Auch die erfindungsgemäß in Frage kommenden, vorzugsweise zwei Hydroxylgruppen aufweisenden Polyäther sind solche der an sich bekannter Art und werden z.B. durch Polymerisation von Epoxiden wie Äthylenglykol, Propylenglykol, Butylenglykol, Tetrahydrofuran, Styroloxid oder Epichlorhydrin mit sich selbst, z.B. in Gegenwart von $BF_3$, oder durch Anlagerung dieser Epoxide, gegebenenfalls ims Gemisch oder nacheinander, an Startkomponenten mit reaktionsfähigen Wasserstoffatomen wie z.B. Wasser oder Alkohole wie Äthylenglykol, Propylenglykol-(1,3) oder -(1,2), 4,4'-Dihydroxy-Diphenylpropan, hergestellt.

Auch durch Vinylpolymerisate modifizierte Polyäther, wie sie z.B. durch Polymerisation von Styrol, Acrylnitril in Gegenwart von Polyäthern entstehen (amerikanische Patentschriften 3 383 351, 3 304 273, 3 523 093, 3 110 695, deutsche Patentschrift 1 152 536), sind ebenfalls geeignet. Die anteilig gegebenenfalls mitzuverwendenden höherfunktionellen Polyäther entstehen in analoger Weise durch an sich bekannte Alkoxylierung von höherfunktionellen Starter molekülen z.B. Ammoniak, Äthanolamin, Äthylendiamin oder Sukrose.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den CO-Komponenten handelt es sich bei den Produkten um Polythiomischäther, Polythioätherester, Polythioätheresteramide.

Als Polyacetale kommen z.B. die aus Glykolen, wie Diäthylenglykol, Triäthylenglykol, 4,4'-Dioxäthoxy-diphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol Tetraäthylenglykol mit Diarylcarbonaten, z.B. Diphenylcarbonat oder Phosgen, hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate. Auch bereits Urethan- oder Harnstoffgruppen enthaltende Polyhydroxylverbindungen sind verwendbar.

Die erfindungsgemäß einzusetzende Polyhydroxyl-Komponente besteht vorzugsweise ausschließlich aus den beispielhaft genannten Glykolen. Daneben kommen wie bereits dargelegt Gemische derartiger Glykole mit höherfunktionellen Polyhydroxylverbindungen in Betracht, soweit die mittlere Hydroxylfunktionalität der Gemische innerhalb des obengenannten Bereichs liegt. Auch die Mitverwendung von einwertigen Alkoholen in der erfindungsgemäß zum Einsatz gelangenden Polyhydroxylkomponente ist möglich, wobei auch denkbar ist, daß die Polyhydroxylkomponente ausschließlich aus einem Gemisch aus einwertigen und höher als difunktionellen Alkoholen besteht, soweit die obengenannte Bedingung bezüglich der mittleren OH-Funktionalität des Gemischs erfüllt ist. Im allgemeinen wird man jedoch bei Mitverwendung von ein- oder höher als zweiwertigen Alkoholen stets auch gleichzeitig eine Glykolkomponente im Polyhydroxylgemisch einsetzen.

Geeignete einwertige Alkohole sind z.B. einfache aliphatische, cycloaliphatische oder araliphatische einwertige Alkohole wie Methanol, Äthanol, Dodecanol, Benzylalkohol oder Cyclohexanol. Die Mitverwendung derartiger einfacher einwertiger Alkohole ist jedoch weniger bevorzugt.

Zwecks Erhöhung der Hydrophilie der Präpolymeren kann es oft von Vorteil sein, hydrophile nichtionische Aufbaukomponenten d.h. insbesondere innerhalb von Polyätherketten eingebaute Äthylenoxid-Einheiten aufweisende ein- oder zweiwertige Alkohole mitzuverwenden. Bei diesen hydrophilen Aufbaukomponenten handelt es sich entweder um Polyäthylenoxid-Segmente aufweisende Dihydroxy-Polyäther eines innerhalb der oben für die Glykole genannten Bereichs liegenden Molekulargewichts oder um einwertige Äthylenoxid-Einheiten aufweisende Polyätheralkohole mit einem Molekulargewicht innerhalb des oben für die einwertigen Alkohole genannten Bereichs. Derartige hydrophile Aufbaukomponenten werden beispielsweise in der Patentanmeldung P 26 37 690.9 beschrieben.

Häufig werden als Polyhydroxylkomponente Gemische aus den genannten Polyhydroxyverbindungen eingesetzt, z.B. um Härte, Elastizität und Griff-Verhalten der aus den Dispersionen erzeugten Beschichtungen den gestellten Forderungen anzupassen.

Die niedermolekularen ein- zwei und mehrwertigen Alkohole werden, falls überhaupt, vorzugsweise in Mengen bis zu maximal 50 Hydroxyl-Äquivalentprozent bezogen auf die gesamte Polyhydroxyl-Komponente mitverwendet.

Die Polyhydroxyl-Komponente wird bei der Durchführung des erfindungsgemäßen Verfahrens mit einem oder mehreren intramolekularen Tricarbonsäuremonoanhydrid(en) oder Tetracarbonsäuremonoanhydrid(en) zur Reaktion gebracht. Bei dieser Umsetzung reagiert ein Teil oder die Gesamtmenge der Hydroxylgruppen der Polyhydroxylkomponente mit dem Anhydrid unter Ringöffnungsaddition, d.h. unter Ausbildung von Estergruppen.

Bei den Anhydriden handelt es sich um beliebige, mindestens eine freie Carboxylgruppe aufweisende intramolekulare Tricarbonsäuremonoanhydride bzw. Tetracarbonsäuremonoanhydride. Es handelt sich somit generell um beliebige Monoanhydride von aliphatischen, cycloaliphatischen, araliphatischen oder aromatischen Tri- oder Tetracarbonsäuren. Beispiele besonders gut geeigneter Monoanhydride sind Trimellitsäureanhydrid, meso-1,2,3,4-Butantetracarbonsäuremonoanhydrid, 1,2,3,4-Cyclopentan-tetracarbonsäuremonoanhydrid ebenfalls geeignet, jedoch weniger bevorzugt sind äquimolare Umsetzungsprodukte von Tetracarbonsäuredianhydriden mit einfachen Monoalkoholen der bereits oben beispielhaft genannten Art, d.h. die bei dieser Umsetzung entstehenden Ester-Anhydrid-Monocarbonsäuren. Für diese Reaktion eignen sich beispielsweise folgende Tetracarbonsäuredianhydride:

1. Pyromellithsäuredianhydrid (1,2,4,5-Benzol-tetracarbonsäuredianhydrid);
2. Bicyclo-(2,2,2)-octen-(7)-2,3,5,6-tetracarbonsäure-2,3:5,6-dianhydrid;
3. Perylen-3,4,9,10-tetracarbonsäuredianhydrid;
4. Naphthalintetracarbonsäuredianhydrid
5. Tetracarbonsäureanhydride folgender Konstitution

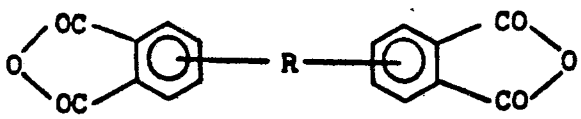

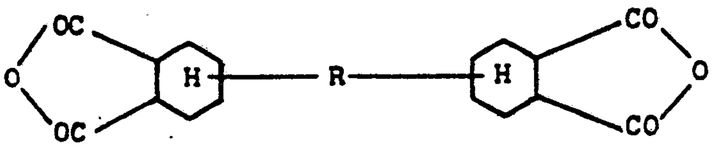

wobei R für eine $C_1$—$C_{12}$-Alkylen, —CO—, —O—, —S—, —$SO_2$— -Brücke steht, wobei die Alkylenbrücke auch Heteroatome aufweisen kann, d.h. insbesondere, daß die Alkylengruppe an die Ringe über Estergruppen gebunden sein kann. Weitere erfindungsgemäß einsetzbare Carboxyanhydride oder als Vorstufen hierfür geeignete Dianhydride können der DOS 2 443 575, S. 6—7, entnommen werden.

Beim erfindungsgemäßen Verfahren können beliebige organische Diisocyanate eingesetzt werden. Vorzugsweise werden Diisocyanate $R_1(NCO)_2$ eingesetzt, wobei $R_1$ die bereits obengenannte Bedeutung hat und vorzugsweise für einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger bevorzugt einzusetzender Diisocyanate sind Tetramethylendiisocyanat, Hexamethylendiisocyanat, Dodecamethylendiisocyanat, 1,4-Diisocyanato-cyclohexan, 1-Isocyanato-3,3,5-trimethyl-5-isocyanatomethylcyclohexan, 4,4'-Diisocyanatodicyclohexylmethan, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanatodiphenylmethan, 4,4'-Diisocyanato-diphenylpropan-(2,2), p-Xylylen-diisocyanat oder $\alpha,\alpha,\alpha',\alpha'$-Tetramethyl-m- oder p-xylylen-diisocyanat, sowie aus diesen Verbindungen bestehende Gemische.

Es ist selbstverständlich auch möglich, beim erfindungsgemäßen Verfahren die in der Polyurethan-Chemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate mit zuverwenden. Auch die Mitverwendung von Monoisocyanaten wie z.B. Phenylisocyanat oder Dodecylisocyanat bzw. von teilblockierten Polyisocyanaten ist im Prinzip möglich. Es muß jedoch stets darauf geachtet werden, daß die mittlere NCO-Funktionalität der Polyisocyanatkomponente zwischen 1,8 und 3,0 liegt.

Zur Teilneutralisation des Umsetzungsprodukts zwischen Polyhydroxylkomponente und Carboxylgruppen aufweisendem Anhydrid eignen sich beliebige anorganische oder organische Basen. Bevorzugte Neutralisationsmittel sind tert. Amine des Molekulargewichtsbereichs 59—200 wie z.B. Trimethylamin, Triäthylamin, Triisopropylamin, Tributylamin, N-Methylpyrrolidin, N-Methylpiperidin, Dimethylaminoäthanol, Dimethylaminopropanol, Dimethylanilin, Pyridin. 2-Methoxyäthyl-dimethylamin, 2-(2-Dimethylamino-äthoxy)-äthanol, 5-Diäthylamino-2-pentanon. Weiterhin geeignet sind anorganische Basen wie die Hydroxyde, Oxyde, Carbonate, Hydrogencarbonate der Alkalimetalle, insbesondere Natriumhydroxyd, Kaliumhydroxyd, Lithiumhydroxyd, Kaliumcarbonat. Diese anorganischen Verbindungen können entweder als solche in feinpulverisierter Form oder auch als wäßrige bzw. alkoholische Lösungen zugegeben werden. Im Falle der Mitverwendung eines gegenüber Isocyanaten reaktionsfähigen Lösungsmittels, wie Methanol oder Wasser muß dieses anschließend destillativ wieder entfernt werden.

Die Umsetzungen der ersten bis dritten Reaktionsstufe können in Anwesenheit von organischen Lösungsmitteln, insbesondere solchen polarer Art, wie Aceton, Methyläthylketon, N-Methylpyrrolidin, Methylenchlorid erfolgen, wobei im allgemeinen das Lösungsmittel in dem Maße zugegeben wird, wie die steigende Viskosität der Polymerschmelze es erfordert. Vorzugsweise wird bei erhöhter Temperatur und in Abwesenheit von Lösungsmitteln gearbeitet. Sofern aus Viskositätsgründen die Anwesenheit von Lösungsmitteln unumgänglich ist werden vorzugsweise nicht mehr als ca. 10%, bezogen auf das Reaktionsgemisch eingesetzt. Wenn möglich werden solche Lösungsmittel eingesetzt, die auch vom Gesichtspunkt der späteren Anwendung erwünscht sind und beispielsweise eine Erniedrigung der Filmbildungstemperatur, Verbesserung des Verlaufs, des Trocknungsverhaltems usw. bewirken. Für die erfindungsgemäß bevorzugten Lack-Dispersionen werden insbesondere Lack-Lösungsmittel zugesetzt, z.B. Methyl-isobutylketon, Glykol-monomethylätheracetat, Glykol-diäthyläther.

Für die erste Reaktionsstufe, die Umsetzung der Polyhydroxyl-Komponente mit dem Carboxyanhydrid werden die Mengenverhältnisse der Reaktionspartner so gewält, daß im Reaktionsgemisch für jede Hydroxylgruppe der Polyhydroxylkomponente 0,05—1 vorzugsweise 0,1 bis 0,5 Anhydridgruppen vorliegen. Diese Umsetzung erfolgt vorzugsweise bei 40—170°C insbesondere bei 50—150°C so lange, bis im IR-Spektrum einer Probe die charakteristischen Anhydrid-Banden bei 1780 $cm^{-1}$ und 1860 $cm^{-1}$ verschwunden sind.

Im nächsten Reaktionsschritt werden dann die Carboxylgruppen des Umsetzungsprodukts aus Polyhydroxyl-Komponente und Carboxy-Anhydrid, welches im Gemisch mit überschüssiger, nicht modifizierter Polyhydroxylkomponente vorliegen kann, mit den beispielhaft genannten Basen so teilneutralisiert, daß in einem Mol des teilneutralisierten Umsetzungsprodukts 0,1—4, vorzugsweise 0,2—1 Mol Carboxylatgruppen, mindestens 0,1 Mol Carboxylgruppen und insgesamt 1,8—3,8, vorzugsweise 1,8—2,2 Mol Carboxyl- und gegebenenfalls Hydroxylgruppen vorliegen. Am einfachsten ist die Teilneutralisation mit tert.-Aminen, die einfach in der benötigten Menge dem Reaktionsgemisch zugegeben werden. Unter den Aminen mit gegenüber Isocyanaten reaktionsfähigen Gruppen sind diejenigen bevorzugt, bei denen die Reaktivität dieser Gruppe wenig ausgeprägt ist, z.B. sek.- oder tert.-Hydroxygruppen oder Amid- oder Urethan-Gruppen, Anorganische Basen werden vorzugsweise in wäßriger oder alkoholischer Lösung zugesetzt, wobei das Lösungsmittel anschließend destillativ entfernt werden muß.

Die nächste Reaktionsstufe des erfindungsgemäßen Verfahrens besteht in der Umsetzung des Carboxylat und freie Carboxylgruppen sowie gegebenenfalls Hydroxylgruppen aufweisenden teilneutralisierten Umsetzungsprodukts, sowie der gegebenenfalls im Gemisch vorliegenden, nichtmodifizierten Polyhydroxylkomponente mit den beispielhaft genannten Polyisocyanaten zum entsprechenden NCO-Präpolymeren. Bei dieser Umsetzung entstehen aus Hydroxyl-Gruppen Urethangruppen und aus Carboxyl-Gruppen unter $CO_2$-Abspaltung Amidgruppen, so daß ein NCO-Präpolymer entsteht, welches Amid-, Carboxylat- und gegebenenfalls Urethangruppen enthält. Die Mengenverhältnisse werden bei dieser Umsetzung so gewählt, daß auf jedes Äquivalent an gegenüber Isocyanatgruppen reaktionsfähigen Gruppen (Carboxyl- und gegebenenfalls Hydroxylgruppen) 1,2 bis 2 und insbesondere 1,3 bis 1,8 Äquivalente NCO-Gruppen entfallen. Es ist auch möglich, einen hohen Polyisocyanatüberschuß einzusetzen und nach Beendigung der Isocyanat-Additionsreaktion das überschüssige Polyisocyanat beispielsweise durchDestillation zu entfernen. Die Umsetzung wird im allgemeinen bei Temperaturen zwischen 40 und 150°C, vorzugsweise 45 bis 130°C, durchgeführt. Insbesondere im Falle der Verwendung von verzweigten Reaktionspartnern für die Polyisocyanat-Komponente, d.h. von Verbindungen die im statistischen Mittel insgesamt mehr als zwei Carboxyl- und Hydroxylgruppen aufweisen, kann es hierbei zweckmäßig sein, die Isocyanats-Additionsreaktion nicht bis zum vollständigen Umsatz, d.h. bis zum vorausberechneten NCO-Gehalt der Umsetzungsprodukte zu führen. So ist es beispielsweise möglich, die Reaktion zu einem Zeitpunkt abzubrechen, zu welchem im Reaktionsgemisch noch freie Carboxyl- und gegebenenfalls Hydroxylgruppen neben freien Isocyanatgruppen vorliegen. Dieser Abbruch der Reaktion kann beispielsweise dadurch erfolgen, daß man das nicht völlig ausreagierte Reaktionsgemisch sofort der Kettenverlängerungsreaktion gemäß vierter Reaktionsstufe, beispielsweise durch Eintragen des Reaktionsgemisches in eine wäßrige Diaminlösung, unterzieht.

Bei dieser Arbeitsweise, bei welcher nicht alle Carboxyl-bzw. Hydroxylgruppen mit der Polyisocyanat-Komponente zur Reaktion gebracht werden wird vorzugsweise in einem Äquivalentverhältnis zwischen Isocyanatgruppen und gegenüber Isocyanatgruppen reaktionsfähigen Gruppen von 0,8:1 bis

1,2:1 gearbeitet, d.h. es ist auch denkbar die Polyisocyanat-Komponente in einer Menge einzusetzen, die einem Äquivalentverhältnis von Isocyanatgruppen gegenüber Isocyanat-reaktiven Gruppen von kleiner als 1:1 entspricht, da die Isocyanat-Additionsreaktion bei der Bildung der Präpolymeren nicht zu Ende geführt wird und durch diesen nur teilweisen Umsatz der eingesetzten Isocyanatgruppen auch bei einer unterschüssigen Menge an Polyisocyanat-Komponente sichergestellt ist, daß das Reaktionsprodukt noch freie Isocyanatgruppen aufweist. Bei dieser Ausführungsform des erfindungsgemäßen Verfahrens kann ein zu starker Anstieg der Viskosität des NCO-Präpolymeren und eine vorzeitige Vernetzung auch bei Verwendung von Verbindungen mit mehr als zwei gegenüber Isocyanatgruppen reaktionsfähigen Gruppen mit Sicherheit vermieden werden.

Bei einer weiteren Variante des erfindungsgemäßen Verfahrens können als Polyisocyanat-Komponente in der dritten Verfahrensstufe auch teilblockierte Polyisocyanate bzw. Gemische aus mono-, di- und/oder polyfunktionellen Isocyanaten mit teilblockierten Polyisocyanaten zum Einsatz gelangen. Auch bei dieser Variante des erfindungsgemäßen Verfahrens kann durch geeignete Wahl der Funktionalität der Verbindungen mit gegenüber Isocyanatgruppen reaktionsfähigen Gruppen und/oder der Funktionalität der Polyisocyanat-Komponente (bezogen auf freie Isocyanatgruppen) sichergestellt werden, daß einerseits eine vorzeitige unerwünschte Viskositätserhöhung bzw. Vernetzung unterbleibt und andererseits Zwischenprodukte mit endständigen Isocyanatgruppen und außerdem blockierten Isocyanatgruppen, sowie bei nicht vollständiger Umsetzung gemäß oben gemachten Ausführungen mit freien Carboxyl-bzw. Hydroxylgruppen erhalten werden. Geeignete teilblockierte Polyisocyanate sind insbesondere teilblockierte Polyisocyanate welche im statistischen Mittel pro Molekül 1,8—2,2 freie Isocyanatgruppen aufweisen, d.h. beispielsweise Triisocyanate mit einer blockierten und zwei unblockierten Isocyanatgruppen. Geeignete teilblockierte Polyisocyanate aufweisende Gemische sind insbesondere solche, welche entweder die zuletztgenannten teilblockierten Polyisocyanate oder aber auch monoblockierte Diisocyanate neben mono-, di- und/oder polyfunktionellen Polyisocyanaten enthalten, wobei die einzelnen Komponenten dieser Gemische so ausgewählt werden sollten, daß die mittlere NCO-Funktionalität (bezogen auf freie Isocyanatgruppen) zwischen 1,8 und 2,2 liegt. Bei Verwendung von gemäß dieser variante des erfindungsgemäßen Verfahrens hergestellten NCO-Präpolymeren im nachstehend beschriebenen vierten Reaktionsschritt können hochmolekulare Polyurethane erhalten werden, welche blockierte Isocyanatgruppen und gegebenenfalls Carboxyl-bzw. Hydroxylgruppen aufweisen und daher durch den Einfluß von Hitze selbstvernetzende Systeme darstellen.

Geeignete Blockierungsmittel sind die in der Polyurethanchemie an sich bekannten monofunktionellen Blockierungsmittel für organische Polyisocyanate wie z.B. ε-Caprolactam, Phenole wie z.B. Phenol oder o-Kresol, Ketoxime wie z.B. Methläthylketon-ketoxim oder C—H-acide Verbindungen wie Malonsäurediäthylester. Die Herstellung der teilblockierten Polyisocyanate erfolgt unter Verwendung der oben beispielhaft genannten organischen Polyisocyanate nach bekannten Methoden der Isocyanatchemie.

Die nächste Stufe des erfindungsgemäßen Verfahrens besteht nun in der Überführung der vorstehend beschriebenen NCO-Präpolymeren in die erfindungsgemäßen Verfahrensprodukte durch eine an sich bekannte Kettenverlängerungs- bzw. Vernetzungsreaktion. (Im Rahmen der vorliegenden Erfindung ist unter "Kettenverlängerung" sowohl eine echte Kettenverlängerung ohne Verzweigung als auch eine Verzweigung bzw. Vernetzung der Präpolymeren (Verwendung von höer als difunktionellen "Kettenverlängerungsmitteln") zu verstehen). Gemäß einer bevorzugten Ausführungsform des erfindungsgemäßen Verfahrens wird diese Kettenverlängerungsreaktion mit der gleichzeitigen Überführung des Verfahrensprodukts in eine wäßrige Dispersion kombiniert. Die einfachste Methode hierzu besteht in der ausschließlichen Verwendung von Wasser als Kettenverlängerungsmittel. Dies bedeutet, daß das flüssige, bzw. in honigartiger Konsistenz vorliegende Präpolymer mit einer 0,2 bis 10-fachen Gewichtsmenge an Wasser verrührt wird. Für diesen Mischvorgang genügen einfache Laboratoriumsrührer, obwohl selbstverständlich auch der Einsatz von Dispergiermaschinen mit hohen Scherkräften ebenso wie die Zuhilfenahme nicht-mechanischer Dispergiermittel wie Ultraschallwellen extrem hoher Frequenz möglich ist. Die Temperatur bei dem Mischvorgang liegt zwischen 1 ° und 180°C, vorzugsweise zwischen 20°C und 100°C. Dieser Prozeß kann durchaus auch unter Druck durchgeführt werden.

Die Kettenverlängerungsreaktion kann jedoch auch unter Verwendung von Gemischen aus Wasser und in Wasser löslichen Kettenverlängerungsmitteln erfolgen, wobei vorzugsweise Kettenverlängerungsmittel eingesetzt werden, welche gegenüber Isocyanatgruppen eine höhere Reaktivität aufweisen als Wasser. Es ist auch möglich, das NCO-Prepolymer in Wasser zu dispergieren und das genannte kettenverlängerungsmittel nach der erfolgten Dispergierung hinzuzufügen. Derartige Kettenverlängerungsmittel sind insbesondere aussschließlich primäre oder sekundäre Aminogruppen aufweisende Hydrazine oder Polyamine, vorzugsweise Hydrazine oder Diamine eines über 31, vorzugsweise zwischen 32 und 600 liegenden Molekulargewichts. Beispiele derartiger als Kettenverlängerungsmittel geeigneter Hydrazine oder Polyamine sind Hydrazin, Äthylendiamin, Diäthylentriamin, 1,2-Diaminopropan, 1,3-Diaminopropan, 3,3,5-Trimethyl-5-aminomethyl-cyclohexylamin oder 1,4-Diaminobutan. Weitere geeignete bifunktionelle Kettenverlängerungsmittel sind in der DT—OS 1 495 847 oder in der DT—AS 1 237 306 beschrieben. Auch bei dieser Ausführungsform des erfindungsgemäßen Verfahrens wird das Wasser in einer 0,2 bis 10-fachen Gewichtsmenge, bezogen auf NCO-Präpolymer eingesetzt.

In einer besonders bevorzugten Ausführungsform des erfindungsgemäßen Verfahrens erfolgt die Kettenverlängerungsreaktion unter Verwendung eines Gemisches aus Wasser und Polyaminen der genannten Art, welche zusätzlich noch durch chemisch fixierte ionische Gruppen, vorzugsweise durch chemisch fixierte Sulfonatgruppen modifiziert sind. Ein derartiges ionisch modifiziertes Kettenverlängerungsmittel ist z.B. das N-(2-Aminoäthyl)-2-aminoäthansulfonsaure Natrium.

Auch die in der vierten Reaktionsstufe erfolgende Kettenverlängerungsreaktion kann unter Mitverwendung von Lösungsmitteln, in welchen das Präpolymer gelöst vorliegt, vorgenommen werden, obwohl es einer der wesentlichen Vorteile des erfindungsgemäßen Verfahrens ist, daß auf derartige Lösungsmittel im Prinzip verzichtet werden kann. Die bei der Kettenverlängerungsreaktion gegebenenfalls einzusetzenden Lösungsmittel entsprechen den Lösungsmitteln, welche auch zur Herstellung der Präpolymere geeignet sind.

Eine weitere Möglichkeit der Kettenverlängerung der gemäß dritter Verfahrensstufe erhaltenen NCO-Präpolymeren kann auch nach den Prinzipien des in US—PS 3 756 992 bzw. des in der DE—OS 26 37 690 beschriebenen Verfahrens erfolgen und zwar dergestalt, daß man aus dem NCO-Präpolymer zunächst durch Reaktion mit vzw. Ammoniak oder primären Aminen wie z.B. Methylamin oder n-Butylamin Präpolymere mit endständigen Harnstoffgruppen herstellt und diese über die Zwischenstufe von Methylolgruppen aufweisenden Präpolymeren durch Umsetzung mit Formaldehyd verlängert oder mit Methylolgruppen aufweisenden Verbindungen der in US—PS 3 756 992 beschriebenen Art vernetzt. Auch die Umsetzung der NCO-Präpolymeren mit Methylolgruppen aufweisenden Verbindungen der in US—PS 3 756 992 genannten Art ohne vorhergehende Überführung der endständigen NCO-Gruppen in die entsprechenden Harnstoffgruppen zu endständigen Methylolgruppen aufweisenden Präpolymeren und deren anschließende thermische Behandlung gemäß US—PS 3 756 992 stellt einen gangbaren Weg der Kettenverlängerung bzw. Vernetzung der in der dritten Stufe des erfindungsgemäßen Verfahrens erhaltenen NCO-Präpolymeren dar. Auch bei der Kettenverlängerung gemäß diesen letztgenannten Varianten geht der Aufbau der hochmolekularen Polyadditionsprodukte bzw. die Herstellung der endständige Methylolgruppen aufweisenden Zwischenprodukte mit deren Dispergierung in Wasser einher. So geschieht vorzugsweise die Reaktion der NCO-Präpolymeren mit Ammoniak oder den beispielhaft genannten primären Aminen zu den entsprechenden endständige Harnstoffgruppen aufweisenden Präpolymeren in wäßrigem Milieu, so daß die Harnstoffgruppen aufweisenden Präpolymeren in Form wäßriger Dispersionen oder Lösungen anfallen. Diese als Dispersionen bzw. Lösungen in Wasser vorliegenden, endständige Harnstoffgruppen aufweisenden Präpolymeren werden dann entweder in wäßriger Phase mit Formaldehyd bzw. Formaldehyd abspaltenden Verbindungen wie z.B. Paraformaldehyd oder mit Methylolgruppen aufweisenden Verbindungen in der wäßrigen Phase zu endständigen Methylolgruppen aufweisenden Präpolymeren umgesetzt, deren Endverlängerung bzw. -Vernetzung vor und/oder während und/oder nach dem Entfernen des Wassers beispielsweise durch Verdunsten oder Verdampfen während der Herstellung von Flächengebilden aus den Dispersionen durch eine Wärmebehandlung bei 25 bis 180°C erfolgt. Bei der Umsetzung der NCO-Präpolymeren mit Methylolgruppen aufweisenden Verbindungen ohne intermediäre Überführung der NCO-Präpolymeren in Harnstoffgruppen aufweisende Präpolymere erfolgt dieser Reaktionsschritt vorzugsweise in Abwesenheit von Wasser worauf sich die Dispergierung der Methylolgruppen aufweisenden Präpolymeren in Wasser anschließt und deren Weiterbehandlung wie oben ausgeführt erfolgt.

Auch eine Kettenverlängerung der NCO-Präpolymeren gemäß den Prinzipien der DE—OS 2 543 091 ist prinzipiell möglich.

Für die verschiedenen Kettenverlängerungsreaktionen besonders gut geeignet sind NCO-Präpolymere, welche

i) eine mittlere NCO-Funktionalität von 1,8 bis 2,2 vorzugsweise 2,
ii) eine Viskosität von 5 000 bis 150 000 cP bei 80°C,
iii) einen Gehalt an Carboxylatgruppen von 0,1 bis 5, vorzugsweise 0,2 bis 2 Gew.-% und
iv) ein mittleres Molekulargewicht von unter 25.000 vorzugsweise unter 10.000 aufweisen.

Bei der Herstellung der NCO-Präpolymeren werden in den erfindungsgemäßen Reaktionsschritten a) bis c) Art und Mengenverhältnisse der Ausgangsmaterialien demzufolge vorzugsweise so gewählt, daß die erhaltenen NCO-Präpolymeren den genannten Kriterien entsprechen.

Die Herstellung von wäßrigen Dispersionen der erfindungsgemäßen Verfahrensprodukte kann selbstverständlich auch unter Mitverwendung externer Emulgatoren erfolgen, obwohl einer der Hauptvorteile des erfindungsgemäßen Verfahrens darin zu sehen ist, daß auf die Verwendung von derartigen Emulgatoren verzichtet werden kann.

Das erfindungsgemäße Verfahren kann selbstverständlich auch unter Mitverwendung der an sich bekannten die NCO/OH-Reaktion beschleunigenden Katalysatoren erfolgen.

Das neue erfindungsgemäße Verfahren bringt gegenüber dem bekannten Lösungsmittelverfahren eine erhebliche Erhöhung der Raum-Zeit-Ausbeute mit sich, da einerseits das Lösungsmittelvolumen und andererseits der energie- und zeitaufwendige Destillationsvorgang entfallen.

Bei der im Rahmen des erfindungsgemäßen Verfahrens bevorzugten Verwendung von ausschließlich difunktionellen Aufbaukomponenten entstehen die bevorzugten erfindungsgemäßen Verfahrensprodukte der eingangs genannten allgemeinen Formeln.

Den nach dem erfindungsgemäßen Verfahren hergestellten Dispersionen stehen die verschiedensten Anwendungsgebiete offen. Sie lassen sich z.B. für die Lederzurichtung einsetzen oder können für die Beschichtung der unterschiedlichsten Materialien, besonders auch für die Textilbeschichtung, verwandt werden. Hier können sie als Kleb- oder Deckstrick Anwendung finden. Auch sind Textilschaumbeschichtungen möglich. Bedeutende Anwendungsgebeite stellen ferner die Verwendung als Klebstoff oder als Lack dar.

Ganz besonders bevorzugt ist die Anwendung der erfindungsgemäß lösungsmittelfrei hergestellten Dispersionen für die Lederzurichtung sowie zur Herstellung von wäßrigen Lacksystemen.

Beispiel 1—8

Diese Beispiele zeigen die Durchführung des erfindungsgemäßen Verfahrens unter Mitverwendung von Aceton als Hilfslösungsmittel.

Ausgangsmaterialien:

Polyester I (PE I): Polyester aus Adipinsäure, Hexamethylenglykol und 2,2-Dimethyl-1,3-propandiol des Molekulargewichts 2.000;
Polyäther I (PÄ I): Polytetramethylenglykol des Molekulargewichts 2.000;
Hexamethylendiisocyanat (HDI);
Trimellitsäureanhydrid (TMA);
Äthylendiamin (ÄDA);
Triäthylamin (TÄA).

Allgemeine Versuchsbeschreibung:

In einem Dreihalskolben mit Metallschliffrührer, Rückflußkühler mit $CaCl_{23}$-Rohr, Kontaktthermometer und Tropftrichter wurde entwässerter Polyester bzw. Polyäther bei 80°C unter Rühren mit gemörsertem TMA versetzt.

Nach einer Reaktionszeit von 2 Stunden bei 120°C hatte sich eine klare Schmelze gebildet, die kein ungelöstes TMA enthielt. Nach Abkühlen auf 60°C wurde zunächst TÄA und nach 15 Minuten HDI rasch zugegeben. Nach Aufheizen auf 110°C ließ man 2 Stunden bie dieser Temperatur reagieren. Das NCO-Präpolymere wurde in Aceton gelöst und mit einer acetonischen Lösung von ÄDA versetzt, wobei sich eine Emulsion bildete. Nach einer Nachrührzeit von 5 Minuten bei 56°C erfolgte unter intensivem Rühren die Zugabe von entionisiertem Wasser. Dispersionsbildung erfolgte durch Phasenumkehr, die nach Zugabe von ca. 40—70 % des Wassers eintrat. Aceton wurde im Vakuum solange abdestilliert, bis sich die Gasphase stärker erwärmte.

In Tabelle 1 sind Versuchsbedingungen sowie Eigenschaften der Dispersionen angegeben.

Tabelle 1
Versuchsbedingungen sowie Eigenschaften der Dispersionen und Filme:

| Beispiel Nummer: | 1 | 2 | 3 | 4 | 5 | 6 | 7 | 8 |
|---|---|---|---|---|---|---|---|---|
| Ausgangsstoffe (mol) | | | | | | | | |
| Polyester I | 0,1 | 0,1 | 0,1 | 0,1 | 0,1 | 0,1 | — | — |
| Polyäther I | — | — | — | — | — | — | 0,1 | 0,1 |
| TMA | 0,02 | 0,025 | 0,03 | 0,035 | 0,04 | 0,04 | 0,02 | 0,04 |
| TÄA | 0,02 | 0,025 | 0,03 | 0,035 | 0,04 | 0,04 | 0,02 | 0,04 |
| HDI | 0,18 | 0,18 | 0,18 | 0,18 | 0,18 | 0,18 | 0,18 | 0,18 |
| ÄDA | 0,025 | 0,025 | 0,025 | 0,025 | 0,025 | 0,025 | 0,025 | 0,025 |
| Aceton (ml) | 400 | 550 | 550 | 800 | 900 | 400 | 400 | 400 |
| Wasser (ml) | 355 | 355 | 355 | 355 | 355 | 355 | 355 | 355 |
| rel. Umschlag[a] | 0,61 | 0,52 | 0,53 | 0,72 | —[e] | 0,36 | 0,50 | 0,61 |
| Dispersionseigenschaften | | | | | | | | |
| Feststoffgehalt (Gew.-%) | 29 | 37 | 44 | 42 | 36 | 36 | 35 | 38 |
| $\eta_{app}$ (m Pa s) bei 22°C[b] | 17 | 16 | 14 | 20 | 20 | 16 | 581 | 18 |
| Stabilität[c] | | | | | | | | |
| nach 2 Tagen | ++ | ++ | ++ | +++ | +++ | +++ | — | +++ |
| nach 50 Tagen | — | + | + | ++ | ++ | +++ | | +++ |
| Filmeigenschaften | | | | | | | | |
| Aussehen[d] | t | t | t | t | t | t | t.R | t |

a) Quotient aus dem Volumen des zugegebenen Wassers und dem Gesamtvolumen des Wassers bei der Phasenumkehr
b) Brookfield-Viskosimeter, 30 U/min, Messung am Tag der Dispersionsherstellung
c) Kriterien für die Stabilität: +++ stabil, keine Sedimentation; ++ geringe Sedimentation; + starke Sedimentation; — Koagulation
d) t = transparent; R = Risse
e) Dispersionsbildung durch Fällung.

Beispiele 9—39

Diese Beispiele zeigen die Durchführung des erfindungsgemäßen Verfahrens ohne Mitverwendung eines Hilfslösungsmittels und unter Kettenverlängerung der NCO-Präpolymeren mit Wasser.

Ausgangsmaterialien:
Wie Beispiele 1—8, sowie
Polyäther II (PÄ II): Polypropylenglykol des mittleren Molekulargewichts 1.025;

Zunächst wird überschüssiges Makroglykol mit endständigen OH-Gruppen mit TMA während 30 Minuten bei 100°C umgesetzt. Nach Neutralisation von 50% der berechneten Carboxylgruppen des erhaltenen Umsetzungsprodukts mit TÄA folgt durch Umsetzung mit überschüssigem HDI in der Schmelze bei 110°C die Bildung eines NCO-Präpolymeren; die Reaktionszeit beträgt hierbei 120 Minuten.

Bei Zugabe von Wasser zu dem NCO-Präpolymeren unter Abreaktion der überschüssigen NCO-Gruppen mit einem Teil des Wassers unter Kettenverlängerung erfolgt Dispersionsbildung.

Tabelle 2
Einfluß der Temperatur während des Dispergierens

Ausgangsstoffe (Mol):

| | |
|---|---|
| PÄII | 0,20 |
| TMA | 0,05 |
| TÄA | 0,05 |
| HDI | 0,30 |

| Beispiel Nr. | 9 | 10 | 11 | 12 | 13 | 14 | 15 |
|---|---|---|---|---|---|---|---|
| Dispersionsbildung Wasser (g) | 400 | 400 | 400 | 400 | 400 | 400 | 400 |
| Zugabegeschwindigkeit des Wassers (g/min) | 36,4 | 36,3 | 36,4 | 33,4 | 36,4 | 38,1 | 36,4 |
| Temp. (°C) | 30±1 | 41±1 | 50±1 | 60±1 | 70±1 | 70±1 | 80±1 |
| $\Delta$ $(NCO)_1$ (mol)[a] | 0,428 | 0,414 | 0,430 | 0,413 | 0,430 | 0,424 | 0,439 |
| $\Delta$ $(NCO)_2$ (mol)[a] | 0,013 | 0,024 | 0,039 | 0,088 | 0,063 | 0,099 | 0,097 |
| Dispersionseigenschaften Feststoffgehalt (%) | 38,0 | 38,7 | 39,2 | 38,6 | 38,3 | 39,0 | 39,9 |
| $\eta'$ (mPa s)[b] | 24 | 39 | 24 | 195 | 598 | 830 | 5700 |
| Stabilität[c] nach 14 Tagen | ++ | ++ | ++ | ++ | +++ | +++ | +++ |
| $d_T$ ($\mu$m)[d] | 0,307 | 0,259 | 0,309 | 0,296 | 0,263 | 0,292 | 0,208 |
| Filmeigenschaften: Sofort gegossene Filme Aussehen[e] | t,B | t | t | t | t | t | t,O |
| $\sigma_{100}$ N $mm^{-2}$)[f] | | 0,176 | 0,227 | 0,265 | 0,339 | 0,328 | |
| $\sigma_{300}$ (N $mm^{-2}$)[f] | | 0,268 | 0,400 | 0,386 | 0,438 | 0,460 | |
| Nach 14 Tagen gegossene Filme Aussehen[e] | z.B. | t | t | t | t | t | t,O |
| $\sigma_{100}$ (N $mm^{-2}$)[f] | 0,152 | 0,142 | 0,197 | 0,231 | 0,361 | | |
| $\sigma_{300}$ (N $mm^{-2}$)[f] | 0,262 | 0,218 | 0,290 | 0,317 | 0,508 | | |

a) $(NCO)_1$ = umgesetzte NCO-Gruppen nach der ersten Reaktionsstufe (theor. Wert: 0,400 mol); $(NCO)_2$ = umgesetzte NCO-Gruppen während des Dispergierens
b) Brookfield-Viskosität, 30 U/min, 20°C, Messung zwei Tage nach Dispersionsherstellung
c) Stabilität: +++ stabil, keine Sedimentation; ++ geringe Sedimentation; + starke Sedimentation; — Koagulation nach 14 Tagen oder früher
d) $\bar{d}_T$ = mittl. Teilchendurchmesser
e) Aussehen: t = transparent mit geringen Blaseneinschlüssen; t,B = transparent mit deutlichen Blaseneinschlüssen; t,O = transparent mit welliger Oberfläche; t,k = transparent, etwas klebrig; nt = nicht transparent; k.F. = kein Film gegossen
f) Spannung bei 100 bzw. 300% Dehnung

Tabelle 3
Einfluß der Temperatur während des Dispergierens

Ausgangsstoffe (mol):

| | |
|---|---|
| PÄ I | 0,10 |
| TMA | 0,04 |
| TÄA | 0,04 |
| HDI | 0,16 |

| Beispiel Nr. | 16 | 17 | 18 |
|---|---|---|---|
| Dispersionsbildung: Wasser (g) | 355 | 355 | 355 |
| Zugabegeschwindigkeit des Wassers (g/min) | 23 | 27 | 27 |
| Temp. (°C) | 40±1 | 50±1 | 60±1 |
| $\Delta$ $(NCO)_1$ (mol) | 0,221 | 0,226 | 0,221 |
| $\Delta$ $(NCO)_2$ (mol) | 0,035 | 0,020 | 0,057 |
| Dispersionseigenschaften: Feststoffgehalt (%) | 37,4 | 38,6 | 40,2 |
| $\eta'$ (m Pa s) | 23 | 97 | Reste |
| Stabilität nach 14 Tagen | ++ | ++ | nicht bestimmt |
| dispergiertes Produkt (%) | 87,0 | 87,7 | nicht bekannt |
| Filmeigenschaften Aussehen | t | t | k.F. |
| $\sigma_{100}$ (N $mm^{-2}$) | 0,885 | 0,861 | — |
| $\sigma_{300}$ (N $mm^{-2}$) | 1,280 | 1,277 | — |

Tabelle 4
Variation des Gehaltes an Trimellitsäureanhydrid

| Ausgangsstoffe (mol): | Beispiel Nr. 19 | 20 | 21 | 22 | 23 | 24 | 25 | 26 |
|---|---|---|---|---|---|---|---|---|
| PÄ II | 0,20 | 0,20 | 0,20 | 0,20 | 0,20 | 0,20 | 0,20 | 0,20 |
| TMA | 0,02 | 0,03 | 0,04 | 0,05 | 0,06 | 0,07 | 0,08 | 0,08 |
| TÄA | 0,02 | 0,03 | 0,04 | 0,05 | 0,06 | 0,07 | 0,08 | 0,08 |
| HDI | 0,30 | 0,30 | 0,30 | 0,30 | 0,30 | 0,30 | 0,30 | 0,30 |
| Dispersionsbildung Wasser (g) | 385 | 390 | 395 | 400 | 400 | 505 | 410 | 410 |
| Zugabegeschwindigkeit des Wassers (g/min) | 31 | 39 | 39 | 36 | 38 | 35 | 34 | 35 |
| Temp. (°C) | 50±1 | 50±1 | 50±1 | 50±1 | 50±1 | 50±1 | 50±1 | 50±1 |
| $\Delta$ $(NCO)_1$ (mol) | 0,416 | 0,420 | 0,423 | 0,430 | 0,440 | 0,444 | 0,426 | 0,454 |
| $\Delta$ $(NCO)_2$ (mol) | 0,047 | 0,031 | 0,027 | 0,039 | 0,036 | 0,034 | 0,049 | 0,045 |
| Dispersionseigenschaften Feststoffgehalt (%) | 40,0 | 38,5 | 38,8 | 39,2 | 38,7 | 34,3 | 39,4 | 39,4 |
| $\eta'$(mPa s) | 20 | 24 | 46 | 24 | 36 | 46 | 95 | 97 |
| Stabilität nach 14 Tagen | — | + | ++ | ++ | ++ | +++ | +++ | +++ |
| $\bar{d}_T$ ($\mu$m) | n.b. | 0,206 | 0,279 | 0,309 | 0,314 | 0,303 | 0,287 | 0,296 |

Tabelle 5
Variation des Gehaltes an Trimellitsäureanhydrid:

| Beispiel Nr. | 27 | 28 | 29 | 30 |
|---|---|---|---|---|
| Ausgangsstoffe (mol): PÄ II | 0,10 | 0,10 | 0,10 | 0,10 |
| TMA | 0,03 | 0,05 | 0,06 | 0,07 |
| TÄA | 0,03 | 0,05 | 0,06 | 0,07 |
| HDI | 0,15 | 0,15 | 0,15 | 0,15 |
| Dispersionsbildung Wasser (g) | 355 | 355 | 355 | 355 |
| Zugabegeschwindigkeit des Wassers (g/min) | 22 | 27 | 12 | 14 |
| Temp. (°C) | 50±1 | 50±1 | 50±1 | 50±1 |
| $\Delta$ $(NCO)_1$ (mol) | 0,225 | 0,236 | 0,227 | 0,238 |
| $\Delta$ $(NCO)_2$ (mol) | 0,012 | 0,020 | 0,045 | 0,019 |
| Dispersionseigenschaften: Feststoffgehalt (%) | 32,5 | 33,7 | 36,8 | 38,3 |
| $\eta'$ (mPa s) | n.b. | 101 | 64 | 250 |
| Stabilität nach 14 Tagen | — | ++ | +++ | +++ |
| dispergiertes Produkt (%) | 62,1 | 66,4 | 79,8 | 69,3 |
| Filmeigenschaften: Aussehen | t | t,k | t,k | t,k |

Tabelle 6
Variation des NCO-Überschusses

| Beispiel Nr. | 31 | 32 | 33 | 34 |
|---|---|---|---|---|
| Ausgangsstoffe (mol): PÄ I ($\overline{M}_n$ = 2000) | 0,10 | 0,10 | 0,10 | 0,10 |
| TMA | 0,04 | 0,04 | 0,04 | 0,04 |
| TÄA | 0,04 | 0,04 | 0,04 | 0,04 |
| HDI | 0,12 | 0,14 | 0,16 | 0,18 |
| Dispersionsbildung: Wasser (g) | 355 | 355 | 355 | 505 |
| Zugabegeschwindigkeit des Wassers (g/min) | 32 | 32 | 23 | 41 |
| Temp. (°C) | 57±3 | 57±3 | 57±3 | 57±3 |
| Dispersionseigenschaften: Feststoffgehalt (%) | 22,0 | 37,2 | 36,7 | 22,4 |
| $\eta'$ (mPa s) | 150 | 84 | 218 | 334 |
| Stabilität | + | +++ | ++ | + |
| dispergiertes Produkt (%) | 42,0 | 89,3 | 86,3 | 60,3 |
| Filmeigenschaften: Aussehen | t,k | t | nt,R | nt,R |
| $\sigma_{100}$ (N mm$^{-2}$) | — | 0,444 | | — |
| $\sigma_{300}$ (N mm$^{-2}$) | — | 0,589 | | — |

Tabelle 7
Variation des NCO-Überschusses

| Beispiel Nr. | 35 | 36 | 37 | 38 | 39 |
|---|---|---|---|---|---|
| Ausgangsstoffe (mol) PÄ II | 0,2 | 0,2 | 0,2 | 0,2 | 0,2 |
| TMA | 0,05 | 0,05 | 0,05 | 0,05 | 0,05 |
| TÄA | 0,05 | 0,05 | 0,05 | 0,05 | 0,05 |
| HDI | 0,24 | 0,28 | 0,30 | 0,32 | 0,36 |
| Dispersionsbildung: Wasser (g) | 380 | 390 | 400 | 400 | 410 |
| Zugabegeschwindigkeit des Wassers (g/min) | 36 | 36 | 36 | 38 | 29 |
| Temp. (°C) | 50±1 | 50±1 | 50±1 | 50±1 | 50±1 |
| $\Delta$ $(NCO)_1$ (mol) | 0,413 | 0,429 | 0,430 | 0,439 | 0,445 |
| $\Delta$ $(NCO)_2$ (mol) | 0,020 | 0,012 | 0,039 | 0,017 | 0,046 |
| Dispersionseigenschaften: Feststoffgehalt (%) | 37,9 | 38,5 | 39,2 | 39,0 | |
| $\eta'$ (mPa s) | 47 | 27 | 24 | 36 | 61 |
| $\bar{d}_T$ ($\mu$m) | 0,318 | 0,337 | 0,309 | 0,278 | 0,253 |
| Filmeigenschaften: Aussehen | t,k | t | t | t | t,R |

In den nachfolgenden Beispielen 40—45 wurden neben den bereits genannten Ausgangsmaterialien folgende Ausgangsmaterialien eingesetzt:

Polyester II (PE II): Phthalsäure-Äthylenglykol-Polyester des Molekulargewichts 2000 und der OH-Zahl 56;

Polyester III (PE III): Phthalsäure-Adipinsäure-Äthylenglykol-Polyester des Molekulargewichts 1750 und der OH-Zahl 64;

Polyester IV (PE IV): Adipinsäre-Butandiol(1,4)-Polyester des Molekulargewichts 2250 und der OH-Zahl 50;

Polyester V (PE V): Adipinsäure-Hexamethylenglykol-Neopentylglykol-Polyester des Molekulargewichts 1700 und der OH-Zahl 66;

Polyäther II (PÄII): propoxyliertes Bisphenol A des Molekulargewichts 550;

Polyäther IV (PÄIV): Monohydroxypolyäther des Molekulargewichts 2150 durch Alkoxylierung von n-Butanol, wobei zunächst eine Propoxylierung und anschließend eine Äthoxylierung durchgeführt wird und wobei der Anteil des Propylenoxids 17 Gew.-% und der Anteil des Äthylenoxids 83 Gew.-% bezogen auf Gesamtmenge der Alkylenoxide ausmacht;

Trimethylolpropan (TMP)

Isophorondiisocyanat (IPDI).

Beispiel 40

0,3 Mol PE II
0,2 Mol PE III
0,26 Mol PÄ III
0,16 Mol TMP
0,6 Mol TMA
0,6 Mol TÄA
1,8 Mol HDI
1,6 Mol $NH_3$ ($NH_3$/NCO — Molverhältnis = 1:1)

3780g entionisiertes Wassers (entsprechend einem Feststoffgehalt des erhaltenen Dispersion von 30 Gew.-%) ·

Das entwässerte Gemisch aus PE II, PE III, PÄ III und TMP wird mit dem TMA versetzt und bei 120—130°C gerührt, bis eine klare Schmelze entsteht. Man kühlt dann auf 80°C ab, gibt das TÄA zu und rührt 15 Minuten nach. Anschließend gibt man HDI zu und rührt bei 80—90°C, bis ein NCO-Wert von 4,2% erreicht ist. In das so erhaltene Prepolymer rührt man bei 70—80°C eine Lösung des $NH_3$ in der Hälfte des Dispergierwassers ein und gibt, sobald das Produkt homogen ist, das restliche Wasser zu. Es entsteht eine dünnflüssige, kolloidale Dispersion, die mehr als 2 Monate lagerstabil ist. pH-Wert = 7,7. Auslaufzeit (Ford $D_4$) = 17 sec.

Eine Probe der Dispersion wurde mit einem Melamin-Formaldehyd-Harz vom Typ des Hexamethoxymethylmelamins versetzt (15 Gew.-% bezogen auf Feststoff) und auf einem phosphatisierten Blech bei 160°C eingebrannt. Es entstand ein klarer, farbloser, glänzender, harter Überzug, der gegen organische Lösungsmittel, wie Xylol, ÄGA oder Aceton beständig ist und lediglich von DMF oberflächlich angelöst wird. Nach 24stündiger Wasserlagerung zeigte der Film keine Trübung.

## Beispiel 41

Ausgangsmaterialien:
0,2 Mol PE II
0,3 Mol PE III
0,26 Mol PÄ III
0,16 Mol TMP
0,45 Mol TMA (entsprechend 1,3 Gew.-% $COO^-$ im dispergierten Feststoff)
0,45 Mol TÄA
1,8 Mol HDI
1,4 Mol $NH_3$ ($NH_3$/NCO = 0,88)
1550 g entionisiertes Wasser (entsprechend einer 50 Gew.-%igen Dispersion)

| | |
|---|---|
| Herstellungsverfahren: | wie Beispiel 40 |
| Dispersion: | hochviskos ($\eta$ = 6000 cP), weiß mit starkem Tyndall-Effekt kein $NH_3$-Geruch, pH = 6,3 |
| Film: | (eingebrannt bei 160°C, mit 15% des Melamin-Formaldehyd-Harzes aus Beispiel 40): hart, klar, farblos, entspricht Beispiel 40. |

## Beispiel 42

0,5 Mol PE IV
0,5 Mol PÄ III
0,6 Mol TMA
0,6 Mol TÄA
1,8 Mol HDI
1,6 Mol $NH_3$
440 g entionisiertes Wasser (entsprechend einer 30%igen Dispersion)

| | |
|---|---|
| Verfahren: | wie Beispiel 40 |
| Dispersion: | dünnflüssig, nahezu kolloidal; 1 Monat lagerstabil; |
| Film: | (eingebrannt bei 160°C, mit 10 Gew.-% des Melamin-Formaldhyd-Harzes aus Beispiel 40): farblos, geringere Härte als in den Beispielen 40 und 41. |

## Beispiel 43

1 Mol PE V
0,6 Mol TMA
0,6 Mol TÄA
1,8 Mol HDI
1,6 Mol $NH_3$
5140 g entionisiertes Wasser (entsprechend einer 30 Gew.-%igen Konzentration)

| | |
|---|---|
| Verfahren: | wie Beispiel 40 |
| Dispersion: | dünnflüssig, nahezu kolloidal, lagerstabil |
| Film: | entspricht Beispiel 42. |

## Beispiel 44

1 Mol PE V
0,6 Mol TMA
0,6 Mol TÄA
1,8 Mol IPDI
1,6 Mol $NH_3$
5370 g entionisiertes Wasser (entsprechend einer 30 %igen Dispersion)

| | |
|---|---|
| Verfahren: | wie Beispiel 40 |

Dispersion: dünnflüssig, nahezu kolloidal, lagerstabil
Film: entspricht Beispiel 42.

Beispiel 45

0,97 Mol PE V
0,06 Mol PÄ IV (entsprechend 4,7 Gew.-% Äthylenoxid im Feststoff)
0,3 Mol TMA (entsprechend 0,6 Gew.-% $COO^-$ im Feststoff)
0,3 Mol TÄA
1,8 Mol HDI
1,6 Mol $NH_3$
5120 g entionisiertes Wasser (entsprechend einer 30 %igen Dispersion)
Verfahren: wie Beispiel 40
Dispersion: dünnflüssig, weiß mit Tyndall-Effekt
Film: entspricht Beispiel 42.

**Patentansprüche**

1. Polyisocyanat-Polyadditionsprodukte, gekennzeichnet durch wiederkehrende Struktureinheiten der Formeln

$$-(CO)_m-NH-R_1-NH-CO-O-R_2-O-CO-\underset{\displaystyle (COO^{(-)}Kat^{(+)})_n}{\underset{|}{R_3}}-CO-NH-R_1-NH-CO-$$

oder

$$-(CO)_m-NH-R_1-NH-CO-\underset{\displaystyle (COO^{(-)}Kat^{(+)})_n}{\underset{|}{R_3}}-CO-O-R_2-O-CO-\underset{\displaystyle (COO^{(-)}Kat^{(+)})_n}{\underset{|}{R_3}}-CO-NH-R_1-NH-CO-$$

in welchen

m für 0 oder 1 steht,

n für 1 oder 2 steht,

$R_1$ für einen Rest steht, wie er durch Entfernung der Isocyanatgruppen aus einem organischen Diisocyanat erhalten wird,

$R_2$ für einen Rest steht, wie er durch Entfernung der Hydroxylgruppen aus einem gegebenenfalls Ätheroder Estergruppen aufweisenden Glykol bzw. Glykol-Gemisch eines (mittleren) Molekulargewichts zwischen 62 und 10 000 erhalten wird,

$R_3$ für einen Rest steht, wie er durch Entfernung der Carboxylgruppen aus einer organischen Tri- oder Tetracarbonsäure erhalten wird und

$Kat^{(+)}$ für ein Alkali- oder sich aus einem tertiären Amin ableitenden Kation steht.

2. Polyisocyanat-Polyadditionsprodukte gemäß Anspruch 1, gekennzeichnet durch einen Gehalt an Carboxylatgruppen von 0,1 bis 5 Gew.-%.

3. Verfahren zur Herstellung von überwiegend linearen Carboxylat-, Amid- und gegebenenfalls Urethangruppen aufweisenden Polyisocyanat-Polyadditionsprodukten mit wiederkehrenden Struktureinheiten der in Anspruch 1 genannten Formeln über die Zwischenstufe von Isocyanatgruppen aufweisenden Präpolymeren, welche durch Umsetzung von organischen Diisocyanaten mit Carboxylatgruppen, freie Carboxylgruppen und gegebenenfalls Hydroxylgruppen aufweisenden Polyestern, welche durch Reaktion einer Polyhydroxylkomponente mit einem intramolekularen Carbonsäureanhydrid unter anschließender Teilneutralisation des Umsetzungsproduktes erhalten worden sind, dadurch gekennzeichnet, daß man

a) eine Polyhydroxylkomponente, welche entweder aus einem oder mehreren Glykolen des (mittleren) Molekulargewichts 62 bis 10 000 oder einem Alkoholgemisch einer mittleren OH-Funktionalität von 1,8 bis 3,0, welches einwertige Alkohole des Molekulargewichtsbereichs 32 bis 5000 und/oder zweiwertige Alkohole des Molekulargewichtsbereichs 62 bis 10 000 und/oder höherfunktionelle Alkohole des Molekulargewichtsbereichs 92 bis 10 000 enthalten kann, besteht, mit intramolekularen Tricarbonsäuremonoanhydriden oder intramolekularen Tetracarbonsäuremonoanhydriden unter Ringöffnung der Anhydridgruppe in solchen Mengen umsetzt, daß pro Hydroxylgruppe der Polyhydroxylkomponente 0,05 bis 1 Anhydridgruppen vorliegen,

b) die Carboxylgruppen des gemäß Reaktionsschritt a) erhaltenen Umsetzungsprodukte so mit einer anorganischen oder organischen Base teilneutralisiert, daß im statistischen Mittel pro Mol des Umsetzungsprodukts 0,1 bis 4 Mol Carboxylatgruppen und insgesamt 1,8 bis 3,8 Mol Carboxyl- und gegebenenfalls Hydroxylgruppen vorliegen,

c) das gemäß Reaktionsschritt b) erhaltene Carboxylat-, Carboxyl- und gegebenenfalls Hydroxylgruppen aufweisende Reaktionsprodukt, sowie die gegebenenfalls im Gemisch vorliegende, nichtmodifizierte Polyhydroxylkomponente mit einer Diisocyanatkomponente einer mittleren NCO-Funktionalität zwischen 1,8 und 3,0 zu einem Carboxylat-, Amid- und gegebenenfalls Urethangruppen aufweisenden Präpolymeren umsetzt, wobei (i) die Menge der Diisocyanatkomponente 1,2 bis 2 Äquivalenten an NCO-Gruppen pro Äquivalent an gegenüber Isocyanatgruppen reaktionsfähigen Gruppen entspricht, oder (ii) ein hoher Diisocyanatüberschuß eingesetzt wird, wobei nach Beendigung der Isocyanat-Additionsreaktion das überschüssige Diisocyanat durch Destillation entfernt wird, oder (iii) die Menge der Isocyanatkomponente 0,8 bis 1,2 Äquivalenten an NCO-Gruppen pro Äquivalent an gegenüber Isocyanatgruppen Reaktionsfähigen Gruppen entspricht, wobei gegebenenfalls durch einen vorzeitigen Abbruch der Isocyanat-Additionsreaktion durch eine sofortige Kettenverlängerungsreaktion gemäß d) sichergestellt wird, daß das Reaktionsprodukt noch freie Isocyanatgruppen aufweist, und

d) schließlich das gemäß Reaktionsstufe c) erhaltene NCO-Präpolymere einer Kettenverlängerungsreaktion unterzieht.

4. Verfahren gemäß Anspruch 3, dadurch gekennzeichnet, daß man zur Kettenverlängerung gemäß Reaktionsschritt d) das NCO-Präpolymere mit Wasser zur Reaktion bringt.

5. Verfahren gemäß Anspruch 3, dadurch gekennzeichnet, daß man zur Kettenverlängerungsreaktion gemäß Reaktionsschritt d) das NCO-Präpolymere mit mindestens 2 primäre und/oder sekundäre Aminogruppen aufweisenden Polyaminen oder Hydrazinen zur Reaktion bringt.

6. Verfahren gemäß Anspruch 3, dadurch gekennzeichnet, daß man zur Kettenverlängerung gemäß Reaktionsschritt d) das NCO-Präpolymere durch Reaktion mit Ammoniak oder einem primären Monoamin in ein endständige Harnstoffgruppen aufweisendes Präpolymer überführt und dieses dann anschließend mit Formaldehyd oder mit Formaldehyd-Derivaten kettenverlängert.

7. Verfahren gemäß Anspruch 3 bis 6, dadurch gekennzeichnet, daß man die Kettenverlängerungsreaktion in Gegenwart überschüssiger Mengen an Wasser unter gleichzeitiger Bildung einer Dispersion des Polyisocyanat-Polyadditionsprodukts durchführt.

**Revendications**

1. Produits de polyaddition de polyisocyanates, caractérisés par des motifs structuraux récurrents de formules:

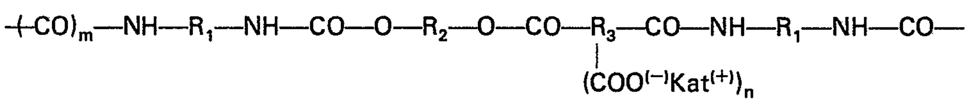

ou

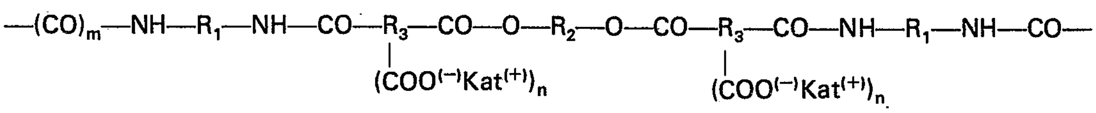

dans lesquelles:

*m* est égal à 0 ou 1,

*n* est égal à 1 ou 2,

$R_1$ est un reste tel qu'on en obtient par l'élimination des groupes isocyanate d'un diisocyanate organique,

$R_2$ est un reste tel qu'on en obtient par l'élimination des groupes hydroxyle d'un glycol ou mélange de glycols portant éventuellement des groupes éther ou ester, de poids moléculaire (moyen) compris entre 62 et 10 000,

$R_3$ est un reste tel qu'on en obtient par l'élimination des groupes carboxyle d'un acide organique tricarboxylique ou tétracarboxylique, et

$Kat^{(+)}$ désigne un cation de métal alcalin ou un cation dérivé d'une amine tertiaire.

2. Produits de polyaddition de polyisocyanates suivant la revendication 1, caractérisés par une teneur en groupes carboxylate de 0,1 à 5% en poids.

3. Procédé pour obtenir des produits de polyaddition de polyisocyanates principalement linéaires, portant des groupes carboxylate, amide et, le cas échéant, uréthanne, à motifs structuraux récurrents des formules indiquées dans la revendication 1, en passant par le stade intermédiaire de prépolymères porteurs de groupes isocyanate, qui ont été obtenus par réaction de diisocyanates organiques avec des polyesters porteurs de groupes carboxylate, de groupes carboxyle libres et, le cas échéant, de groupes hydroxyle, obtenus par réaction d'un composant polyhydroxylique avec un anhydride d'acide carboxylique intramoléculaire, suivie d'une neutralisation partielle du produit de réaction, procédé caractérisé en ce que:

a) on fait réagir un composant polyhydroxylique qui est constitué ou bien par un ou plusieurs glycols de poids moléculaire (moyen) compris entre 62 et 10 000, ou bien par un mélange d'alcools de fonctionnalité hydroxylique moyenne comprise entre 1,8 et 3,0, qui peut renfermer des alcools

monovalents de poids moléculaire compris dans la plage de 32 à 5000 et/out des alcools divalents de poids moléculaire compris dans la plage de 62 à 10 000 et/ou des alcools de valence supérieure de poids moléculaire compris dans la plage de 92 à 10 000, avec des mono-anhydrides d'acides tricarboxyliques intramoléculaires ou des mono-anhydrides d'acides tétracarboxyliques intramoléculaires avec ouverture du noyau du groupe anhydride, en quantités telles qu'il y ait 0,05 à 1 groupe anhydride par groupe hydroxyle du composant polyhydroxylique,

b) on neutralise partiellement les groupes carboxyle des produits réactionnels obtenus conformément à l'étape de réaction a) avec une base minérale ou organique afin qu'il y ait en moyenne statistique, par mole du produit de réaction, 0,1 à 4 moles de groupes carboxylate et au total 1,8 à 3,8 moles de groupes carboxyle et, le cas échéant, hydroxyle,

c) on fait réagir le produit réactionnel obtenu conformément à l'étape b) de réaction, portant des groupes carboxylate, carboxyle et, le cas échéant, hydroxyle, ainsi que le composant polyhydroxylique non modifié, éventuellement présent dans le mélange, avec un composant diisocyanate de fonctionnalité NCO moyenne comprise entre 1,8 et 3,0 pour former un prépolymère porteur de groupes carboxylate, amide et, le cas échéant, uréthanne, réaction dans laquelle (i) la quantité de composant diisocyanate correspond à 1,2 à 2 équivalents de groupes NCO par équivalent de groupes aptes à réagir vis-à-vis des groupes isocyanate, ou (ii) on utilise un grand excés de diisocyanate, en éliminant par distillation le diisocyanate en excès vers la fin de la réaction d'addition de l'isocyanate, ou (iii) la quantité de composant isocyanate correspond à 0,8 à 1,2 équivalent de groupes NCO par équivalent de groupes aptes à réagir vis-à-vis des groupes isocyanate, et on s'assure alors, le cas échéant par un arrêt prématuré de la réaction d'addition de l'isocyanate par une réaction immédiate d'allongement de chaîne selon d), que le produit de réaction porte encore des groupes isocyanate libres, et

d) on soumet enfin à une réaction d'allongement de chaîne le NCO-prépolymère obtenu conformément à l'étape réactionnelle c).

4. Procédé suivant la revendication 3, caractérisé en ce qu'il consiste à faire réagir le NCO-prépolymère avec de l'eau en vue de l'allongement de chaîne selon l'étape réactionnelle d).

5. Procédé suivant la revendication 3, caractérisé en ce qu'il consiste à faire réagir le NCO-prépolymère avec des polyamines portant au moins deux groupes amino primaires et/ou secondaires ou des hydrazines en vue de la réaction d'allongement de chaîne conformément à l'étape de réaction d).

6. Procédé suivant la revendication 3, caractérisé en ce que, pour l'allongement de chaîne conformément à l'étape réactionnelle d), le NCO-prépolymère est transformé par réaction avec l'ammoniac ou avec une monoamine primaire en un prépolymère porteur de groupes urée terminaux et ce prépolymère est ensuite soumis à une réaction d'allongement de chaîne avec le formaldéhyde ou avec des dérivés du formaldéhyde.

7. Procédé suivant l'une quelconque des revendications 3 à 6, caractérisé en ce que la réaction d'allongement de chaîne est conduite en présence de quantités d'eau en excès avec formation simultanée d'une dispersion du produit de polymérisation par addition de polyisocyanate.

## Claims

1. Polyisocyanate polyaddition products, characterized by recurrent structural units of the formulae

$$-(CO)_m-NH-R_1-NH-CO-O-R_2-O-CO-\underset{\substack{|\\(COO^{(-)}Cat^{(+)})_n}}{R_3}-CO-NH-R_1-NH-CO-$$

oder

$$-(CO)_m-NH-R_1-NH-CO-\underset{\substack{|\\(COO^{(-)}Cat^{(+)})_n}}{R_3}-CO-O-R_2-O-CO-\underset{\substack{|\\(COO^{(-)}Cat^{(+)})_n}}{R_3}-CO-NH-R_1-NH-CO-$$

in which

m represents 0 or 1,

n represents 1 or 2,

$R_1$ represents a group of the kind obtained by removal of the isocyanate groups from an organic diisocyanate

$R_2$ represents a group of the kind obtained by removal of the hydroxyl groups from a glycol or glycol mixture, which glycol or glycol mixture has a molecular weight or average molecular weight of between 62 and 10,000 and may contain ether or ester groups,

$R_3$ represents a group of the kind obtained by removal of the carboxyl groups from an organic tricarboxylic or tetracarboxylic acid, and

$cat^{(+)}$ represents an alkali metal cation or a cation derived from a tertiary amine.

2. Polyisocyanate polyaddition products according to claim 1, characterized by containing from 0.1 to 5% by weight of carboxylate groups.

3. Process for the preparation of predominantly linear polyisocyanate polyaddition products containing carboxylate and amide groups and optionally also urethane groups and having recurrent structural units of the formulae given in claim 1, via the intermediate stage of prepolymers containing isocyanate groups, which prepolymers have been obtained by the reaction of organic diisocyanates with polyesters which have carboxylate groups, free carboxyl groups and, optionally also hydroxyl groups, these polyesters having been obtained by reacting a polyhydroxyl component with an intramolecular carboxylic acid anhydride followed by partial neutralization of the reaction product, characterized in that

a) a polyhydroxyl component which consists either of one or more glycols having a molecular weight or average molecular weight of from 62 to 10,000 or of an alcohol mixture having an average OH functionality of 1.8 to 3.0, which alcohol mixture may contain monohydric alcohols with molecular weights in the range of 32—5,000 and/or dihydric alcohols within a molecular weight range of 62 to 10,000 and/or higher functional alcohols within a molecular weight range of 92 to 10,000 is reacted in such quantities with intramolecular tricarboxylic acid monoanhydrides or intramolecular tetracarboxylic acid monoanhydrides in a ring-opening reaction of the anhydride group that from 0.05 to 1 anhydride groups are present per hydroxyl group of the polyhydroxyl component;

b) the carboxyl groups of the reaction products obtained in reaction step a) are partly neutralized with an inorganic or organic base so that, on statistical average, from 0.1 to 4 mol of carboxylate groups and a total of from 1.8 to 3.8 mol of carboxyl groups and optionally hydroxyl groups are present per mol of reaction product;

c) the reaction product obtained in step b) containing carboxylate and carboxyl groups and may also contain hydroxyl groups, as well as the non-modified polyhydroxyl component which may also be present in the mixture, are reacted with a diisocyanate component having an average isocyanate functionality of between 1.8 and 3.0 to form a prepolymer which contains carboxylate and amide groups and may also contain urethane groups, wherein (i) the amount of the diisocyanate component corresponds to 1.2 to 2 equivalents of isocyanate groups per equivalent of isocyanate reactive groups, or (ii) a large excess of diisocyanate is used, the excess diisocyanate being removed by distillation after the isocyanate addition reaction, or (iii) the amount of the isocyanate component corresponds to 0.8 to 1.2 equivalents of isocyanate groups per equivalent of isocyanate reactive groups, if necessary prematurely stopping the isocyanate addition reaction by an immediate chain lengthening reaction according to d), to ensure that the reaction product still contains free isocyanate groups and

d) lastly, the isocyanate prepolymer obtained according to reaction step c) is subjected to a chain lengthening reaction.

4. Process according to claim 3, characterized in that chain lengthening according to reaction step d) is carried out by reacting the isocyanate prepolymer with water.

5. Process according to claim 3, characterized in that chain lengthening according to reaction step d) is carried out by reacting the isocyanate prepolymer with hydrazines or polyamines which have at least two primary and/or secondary amino groups.

6. Process according to claim 3, characterized in that chain lengthening according to reaction step d) is carried out by converting the isocyanate prepolymer into a prepolymer having urea end groups by reacting it with ammonia or a primary monoamine, and this prepolymer with urea end groups is then chain lengthened with formaldehyde or with formaldehyde derivatives.

7. Process according to claims 3 to 6, characterized in that the chain lengthening reaction is carried out in the presence of excess quantities of water with simultaneous formation of a dispersion of the polyisocyanate polyaddition product.